# EUROPEAN PATENT SPECIFICATION

(11) **EP 0 969 542 B1**
(45) Date of publication and mention of the grant of the patent: **23.06.2010**
(21) Application number: 98900705.9
(22) Date of filing: 22.01.1998
(51) Int. Cl.: H01M 10/052, H01M 6/06, H01M 6/14, H01M 6/18, H01M 10/30

(54) **BATTERY**
BATTERIE
BATTERIE

(43) Date of publication of application: 05.01.2000
(73) Proprietor: MITSUBISHI DENKI KABUSHIKI KAISHA, Chiyoda-ku Tokyo 100-8310 (JP)
(72) Inventor: AIHARA, Shigeru c/o Mitsubishi Denki K.K., Chiyoda-ku, Tokyo 100-8310 (JP); TAKEMURA, Daigo c/o Mitsubishi Denki K.K., Chiyoda-ku, Tokyo 100-8310 (JP); SHIOTA, Hisashi c/o Mitsubishi Denki K.K., Chiyoda-ku, Tokyo 100-8310 (JP); ARAGANE, Jun c/o Mitsubishi Denki K.K., Chiyoda-ku, Tokyo 100-8310 (JP); URUSHIBATA, Hiroaki c/o Mitsubishi Denki K.K., Chiyoda-ku, Tokyo 100-8310 (JP); YOSHIDA, Yasuhiro c/o Mitsubishi Denki K.K., Chiyoda-ku, Tokyo 100-8310 (JP); HAMANO, Kouki c/o Mitsubishi Denki K.K., Chiyoda-ku, Tokyo 100-8310 (JP); MURAI, Michio c/o Mitsubishi Denki K.K., Chiyoda-ku, Tokyo 100-8310 (JP); INUZUKA, Takayuki c/o Mitsubishi Denki K.K., Chiyoda-ku, Tokyo 100-8310 (JP)
(74) Representative: Sajda, Wolf E.
(86) International application number: PCT/JP1998/000248
(87) International publication number: WO 1999/038224

(56) References cited:
- JP-A- 6 052 891
- JP-A- 9 500 485
- JP-A- 09 312 152
- US-A- 5 512 389

## Description

### Technical Field

This invention relates to a battery and, more particularly, to a battery structure that realizes a light, compact and thin battery having a high discharging capacity at a high current density and satisfactory cycle characteristics. In particular, the invention relates to a battery as defined in the preamble of claim 1. Such a battery is known from JP-A-09-312 152.

### Background of the Invention

Batteries have been used long as a main power source or a backup power source for a variety of equipment. The demand for batteries has recently been increasing with the development of portable electronic equipment, such as cellular phones and portable personal computers. Primary batteries and secondary batteries are available according to use. As to secondary batteries having great convenience, high performance batteries such as lithium ion secondary batteries and nickel-hydrogen batteries have been attracting attention. The present invention will hereinafter be explained by referring to lithium ion secondary batteries the demand of which has been steeply increasing for use in portable electronic equipment.

Conventional lithium ion secondary batteries comprise a battery body that is a cylindrical roll of an electrode body or a stack of rectangular electrode bodies, the electrode body being composed of a positive electrode, a negative electrode, and a separator that is interposed between the two electrodes to serve for insulation and retention of an electrolyte. The battery body is put in a metal-made case so that the positive electrode, the negative electrode and the separator can be brought into intimate contact by the pressure of the case thereby to maintain the contact between each electrode and the separator.

An electrical contact can be maintained by putting the battery body in a metal-made case, but there is a problem that the case, being made of metal, increases the weight of the battery. Moreover, it is difficult to make a thin metal case. Difficulty in making a thin case has been a great obstacle to fulfillment of the demand for batteries to be used in compact portable equipment.

In this connection, US-A-5,437,692 discloses a structure in which a lithium ion-conducting polymer is used as an ion conducting layer, and a positive electrode and a negative electrode are joined to the ion-conducting layer with an adhesive layer containing a lithium compound. The inventors of the present invention previously proposed in Japanese Patent Application No. 8-338240 a battery structure requiring no metal-made rigid case and a process for producing the same, in which a positive electrode and a negative electrode are previously joined to a separator with an adhesive resin.

The method comprising joining a positive and a negative electrode to a lithium ion-conducting polymer with an adhesive layer containing a lithium compound is disadvantageous in that the adhesive layer attains weak adhesion and becomes considerable resistance to ion conduction. The method comprising previously joining a positive and a negative electrode to a separator with an adhesive resin has made it feasible to maintain an electrical contact among them without imposing an external force but involves a problem that resistance between electrodes (i.e., a positive electrode and a negative electrode) increases because of the existence of not only the separator but the adhesive resin between the electrodes.

Direct bonding of electrodes is a conceivable method. In this case, it is necessary to secure both ion conduction and electron insulation between electrodes that ought to be undertaken by a conventional ion-conducting polymer or separator, and yet to join the electrodes firmly.

Further, the conventional ion-conducting polymer has weak adhesive strength, and the conventional adhesive resin joining electrodes and a separator has high adhesive strength but tends to deteriorate ion conductivity.

Where the conventional adhesive resin is used, it turned out that cases are met with in which a solution of the adhesive resin is absorbed by a porous electrode only to exhibit low adhesive strength or even fail to bond.

In addition, electrodes have their surfaces smoothed by pressing but still have unevenness of several µm to form vacancies where a separator and the electrodes are not in contact. The vacancies that should have been filled with an electrolyte may get starved of the electrolyte, which depends on the amount of the electrolyte supplied and the condition of use of the battery. Starvation of the electrolyte leads to an increase of internal resistivity of the battery and reductions in battery characteristics.

The document JP-A-09-312152 discloses a battery, wherein the front and back surfaces of a positive electrode are coated with a positive electrode active material, while the front and back surfaces of a negative electrode are coated with a negative electrode active material to form a battery. A water-absorbing resin film is laminated on the surface and the back surface of the positive electrode and has the function of a separator. The water-absorbing resin film also includes non-conductive filler particles having a size with a diameter lying between 10 µm and 100 µm.

The document US-A-5 512 389 discloses a rechargeable non-aqueous thin film lithium battery having a negative electrode comprising a polymer laminate with carbon embedded therein, and a layer of fine carbon agglomerated with a lithium compound containing an organic binder carried by the polymer laminate. The positive electrode contains a layer of fine particles of a metal oxide, agglomerated with a lithium compound containing an organic binder, and the layer is supported on another polymer laminate embedding carbon. The document is silent as to filler particles having a specific size or diameter. The document is also silent concerning a specific ratio between an adhesive resin layer and such specific filler particles.

The document JP-A-06-052 891 discloses a lithium solid electrolyte secondary battery wherein a carbonaceous material capable of trapping lithium ions is disposed near a negative electrode. The carbonaceous material is provided by a sheet of a carbonaceous porous body which is divided along its thickness into two layers, one of which is buried into a layer of solid electrolyte, while lithium metal is packed in the other layer to form a layer of a negative electrode active material. The document is silent as to a specific resin layer interposed between the positive and negative electrodes which comprises a filler material of a specific particle size and which are embedded in a specific ratio.

The document WO 95/15589 discloses a rechargeable battery structure comprising a positive electrode element, a negative electrode element, and a separator element disposed between them, wherein each of the elements comprises a flexible, self supporting polymeric matrix film composition, and wherein each of the elements is bonded to contiguous elements at its respective interfaces to form a unitary flexible laminate structure. The separator element is formed by a composition of a polymeric material and a battery electrolyte solution. The separator element may comprise an inorganic filler, but the document is silent as to any specific particles sizes of the filler particles and the ratio of such filler particles in the corresponding adhesive resin.

The present invention has been reached, aiming at settlement of the above-described problems. It is an object of the invention to provide a light, compact and thin battery in which a positive and a negative electrode are joined firmly to maintain the adhesive strength while securing both electron insulation and ion conduction between electrodes and decreasing resistance between electrodes, i.e., internal resistance of a battery, to improve battery characteristics.

### Disclosure of the Invention

According to the invention, the object is solved by means of a battery as defined in claim 1. Advantageous further developments of the battery according to the invention are specified in the sub-claims.

A battery according to the invention comprises a battery body having a positive and a negative electrode containing an active material, an electrolytic solution containing an electrolyte, and an adhesive resin layer which is interposed in between the positive electrode and the negative electrode and is joined to at least one of the positive and the negative electrodes, wherein the adhesive resin layer comprises at least one layer and contains fillers. In this structure, at least one of the positive electrode and the negative electrode is directly bonded to the adhesive resin layer, and the filler added makes the adhesive resin layer porous. The electrolyte and an adhesive resin solution can be held in the pores. As a result, internal resistivity of the battery can be reduced while maintaining adhesive strength to provide satisfactory battery characteristics.

According to a specific embodiment of the present invention the electrolyte is an organic electrolyte containing lithium ions. This mode, when applied to lithium ion secondary batteries which are required to have reduced weight and thickness, provides a high performance compact battery.

According to a specific embodiment of the present invention the average particle size of the filler is equal to or smaller than the particle size of the active material of the positive and negative electrodes. According to this mode, when the positive electrode and the negative electrode are joined with an adhesive resin, an adhesive resin solution having the adhesive resin dissolved in a solvent is hardly absorbed by the electrode active material so that it can be held as an adhesive resin layer to give necessary adhesive strength.

In the battery according to the invention it is essential that the average particle size of the filler is 1 µm or smaller. In this manner, the filler manifests a proper thickening effect for the adhesive resin solution to make the adhesive resin solution hardly absorbable by the active material thereby securing necessary adhesive strength. Further, the filler makes the adhesive resin layer porous to improve ion conductivity thereby providing satisfactory battery characteristics.

According to a specific embodiment of the present invention the sum of a volume ratio of the adhesive resin and that of the filler per unit volume of the adhesive resin layer is less than 1. This mode secures the porosity of the formed adhesive resin layer thereby securing satisfactory ion conduction.

In the battery according to the invention it is essential that the sum of a volume ratio of the adhesive resin and that of the filler per unit volume of the adhesive resin layer is 0.2 to 0.8. According to this embodiment, the voids of the porous adhesive resin are filled with the electrolyte to exhibit sufficient ion conductivity.

According to a specific embodiment of the present invention the filler comprises at least one of non-conductive materials and semiconductors. According to this mode, the adhesive resin layer can be made porous to provide excellent battery characteristics including satisfactory ion conductivity while retaining adhesive strength.

According to a specific embodiment of the present invention the adhesive resin layer comprises a layer containing an electrically conductive filler and a layer containing at least one of non-conductive fillers and semiconductive fillers. According to this embodiment, internal resistivity of the battery can further be diminished by the conductive filler-containing layer.

According to a specific embodiment of the present invention the adhesive resin layer is constituted so as to fill the unevenness on the positive and the negative electrodes. This structure is effective in increasing the adhesive strength and preventing reduction of battery characteristics due to starvation of the electrolyte.

According to a specific embodiment of the present invention the battery body is a laminate of a plurality of electrode bodies each composed of a single layer of the positive electrode, a single layer of the adhesive resin layer, and a single layer of the negative electrode.

According to a specific embodiment of the present invention the laminate is composed of the positive electrodes and the negative electrodes which are alternately interposed among a plurality of the adhesive resin layers.

According to a specific embodiment of the present invention the laminate is composed of the positive electrode and the negative electrode which are alternately interposed between adhesive resin layers and rolled up.

According to a specific embodiment of the present invention the laminate is composed of the positive electrode and the negative electrode which are alternately interposed between adhesive resin layers and folded.

### Brief Description of Drawings

Fig. 1 is a diagram showing the volume ratio in the adhesive resin layer of the battery according to the invention.
Fig. 2 is a schematic cross-sectional view showing the space formed in the interface between a positive electrode and a negative electrode in the battery according to the invention.
Fig. 3 is a graph showing the change in discharge capacity brought about by addition of an alumina filler to a PVDF resin.
Fig. 4 is a graph showing the change in discharge capacity caused by addition of an alumina filler to a PVA resin.
Fig. 5 is a graph showing the relationship between peel strength and discharge capacity with an alumina filler added having a varied average particle size.
Fig. 6 is a graph showing the relationship between peel strength and discharge capacity against volume percentage of the voids of an adhesive resin layer.
Fig. 7 is a graph showing the relationship between peel strength and discharge capacity against thickness of an adhesive resin layer.

### The Best Mode for Carrying out the Invention

The modes for carrying out the invention are hereinafter described by referring to the drawings.

In the battery according to the present invention consists a positive electrode and a negative electrode are joined directly with an adhesive resin layer so as to reduce internal resistivity of the battery. The positive and the negative electrodes are made up of fine particles of the respective active materials bound by a binder and molded and are porous. Where an adhesive resin is used to join the positive and the negative electrodes, ion conductivity is lessened to deteriorate battery characteristics according as the amount of the adhesive resin is increased for strengthening the adhesion. This is because the adhesive resin layer is formed in a film to block the passages for ion migration. Therefore, the problem ought to be solved only if the adhesive resin is not filmy but porous. In the present invention the adhesive resin layer can be made porous by incorporating a filler into the adhesive resin.

If an adhesive resin solution containing no filler is applied to an electrode (a positive and a negative electrode) for bonding, the adhesive resin solution will be absorbed by the electrode that is porous. Where a filler is mixed into the adhesive resin solution, the adhesive resin layer is provided with a porous structure formed by the filler. Since the adhesive resin solution is held in the pores of the porous structure and thereby prevented from being absorbed by the electrode, the adhesive resin solution can be maintained on the adherend surface. Further, this effect brings about an increase in viscosity of the adhesive resin solution to further improve adhesive resin holding properties.

The average particle size of the filler to be added is preferably not greater than that of the electrode active material, particularly 1 µm or smaller. Filler particles having an average particle size 1 µm or greater form pores the diameter of which approximates the pore size of the electrode, and the ability of holding the electrolytic solution decreases. Where filler particles have an average particle size equal to or greater than the particle size of the electrode active material, the pores lose the ability of holding the electrolyte, resulting in reductions of battery characteristics. That is, the filler added produces no substantial effect. The sedimentation velocity of the filler particles in the adhesive resin solution increases with an increasing average particle size, which considerably deteriorates the handling properties of the adhesive resin solution. With the average particle size being 1 µm or smaller, the filler moderately increases the viscosity of the adhesive resin solution and makes the adhesive resin layer porous. The adhesive resin solution and the electrolytic solution can thus be held in the interface between electrodes.

The preference for the above-specified particle size of the filler applies to the particles constituting the most part of the filler. It does not matter if the filler contains particles out of that range.

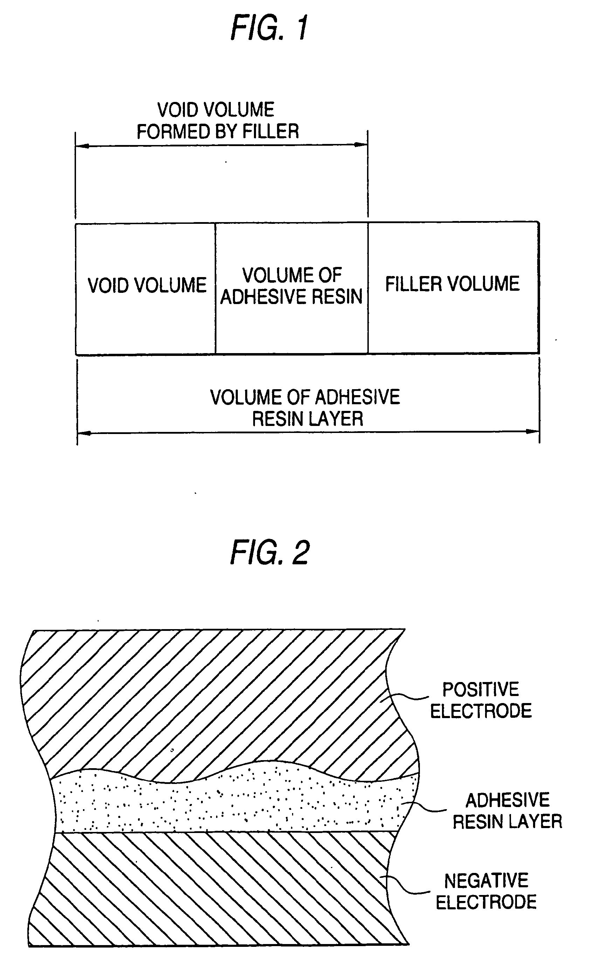

An adhesive resin solution using a solution type adhesive resin is made up of a filler, an adhesive resin, and a solvent. Since the solvent is removed on drying, the resulting adhesive resin layer is composed of the filler, the adhesive resin, and the voids formed on solvent's drying. The constitution of the adhesive resin layer is illustrated in Fig. 1. As can be seen from Fig. 1, the void volume formed by the filler is made up of the volume of the adhesive resin and the volume of the voids formed on solvent's drying. If all the void volume formed by the filler is filled with the adhesive resin, the adhesive resin layer fails to retain its porosity and becomes an insulating layer. Hence, the sum of a volume ratio of the adhesive resin and that of the filler per unit volume of the adhesive resin layer should be less than 1.

In order for the adhesive resin layer to retain porosity, it is required as stated above that the sum of a volume ratio of the adhesive resin and that of the filler per unit volume of the adhesive resin layer be less than 1. On the other hand, in order for the voids of the porous adhesive resin to be filled with an electrolytic solution to exhibit sufficient ion conductivity, it is desirable for the adhesive resin layer to have a void volume of about 30%. From this standpoint, the sum of a volume ratio of the adhesive resin and that of the filler per unit volume of the adhesive resin layer should be 0.2 to 0.8. In other words the volume percentage of the voids based on the adhesive resin layer should be 20% to 80%.

The filler is not particularly limited in material as far as the above-specified average particle size can be realized. Inorganic substances such as oxides, e.g., Al₂O₃, SiO₂, ZrO₂, and LiAlO₂, carbides, e.g., SiC, B₄C, and ZrC, and nitrides, e.g., SiN, BN, and TiN, are stable in an electrolyte and, because they have low conductivity, there is no fear of a short circuit even where the filler-containing adhesive resin is present to connect the electrodes. Because polymers such as polyolefin resins and polymethyl methacrylate have not only low conductivity but a small specific gravity, they are effective in minimizing an increase of weight as compared with inorganic fillers or metallic fillers.

An inorganic salt, such as LiPF₆ or LiClO₄, that does not dissolve in an electrolytic solution or remains undissolved can serve as a filler to form fine pores. Even where the inorganic salt dissolves in an electrolytic solution, it leaves pores in the adhesive resin layer after dissolving, making it possible to increase the porosity of the adhesive resin layer.

Where a conductive filler, such as carbon or metal, is used, the adhesive resin layer is endowed with electrical conductivity. The adhesive resin layer thus having conductivity, electron conduction is not hindered even if the adhesive resin enters the interstices of an electrode. However, in case such a conductive material as carbon is used, the adhesive resin layer loses the function of insulation, requiring some manipulation for prevention of a short circuit between the electrodes. A short circuit can be prevented by, for example, joining the electrodes via a three-layered adhesive resin layer composed of a pair of adhesive resin layers containing a conductive filler and an adhesive resin layer containing an insulating filler interposed therebetween. A short circuit can also be prevented by joining the electrodes via a two-layered adhesive resin layer composed of a layer containing a conductive filler and a layer containing an insulating filler.

It is primarily required of the adhesive resin layer to have insulating properties against electron conduction between each electrode. In addition, where the filler-containing adhesive resin layer has such a form as to fill the space existing on the surface of each electrode due to the surface unevenness, the adhesive strength increases, and reduction in battery characteristics due to shortage of the electrolyte can be prevented. Because the surface of an electrode has not a little unevenness on the order of several microns, it is desirable that the filler-containing adhesive resin be present so as to fill the gap as shown in Fig. 2. Supposing an allowable reduction in discharge capacity due to resistance of the adhesive resin layer is up to 50%, a desirable thickness of the adhesive resin layer is 200 µm or smaller. In order to minimize the reduction in discharge capacity, a more desirable thickness of the adhesive resin layer is 50 µm or smaller.

While the shape of the filler to be added to the adhesive resin is not particularly limited, it includes a spherical shape, an elliptical shape, a fibrous shape, and a flaky shape. A spherical filler will achieve an increased packing density, making the adhesive resin layer thinner. An elliptical, fibrous or flaky filler has an increased specific surface area to increase the void volume of the adhesive resin layer.

While the adhesive resin is not particularly limited in kind, materials which, when present in battery materials, are not corroded by an electrolytic solution containing an electrolyte or an electrode-forming material and are capable of retaining adhesiveness are preferred. In particular, adhesive resins of solution type are more effective, for the adhesive resin layer can easily be made porous. In lithium ion secondary batteries containing an organic electrolyte, fluorocarbon resins represented by polyvinylidene fluoride (PVDF) and polymers containing polyvinyl alcohol in the molecular structure thereof, represented by polyvinyl alcohol, are preferred.

While not limiting, the adhesive resin is preferably applied in a manner agreeable with a desired thickness and a coating form. Illustrative examples of coating methods include screen printing, bar coating, roll coating, gravure printing, and doctor blade coating.

The invention does not impose particular restriction on the structure of batteries to which the invention is applied. The invention is applicable to batteries having a battery body comprising a positive electrode, a negative electrode, and an adhesive resin layer interposed between the electrodes. Accordingly, the battery body can be an electrode body composed of a single positive electrode layer, a single adhesive resin layer, and a single negative electrode layer (hereinafter referred to as a unit electrode body) or a laminated battery body comprising a plurality of such unit electrode bodies. When the invention is applied to a battery having such a laminated battery body, there is provided a battery having high performance and a high battery capacity.

The laminated battery body can be formed by alternately superposing a plurality of positive electrodes and negative electrodes all cut in sizes via an adhesive resin layer or by rolling or folding one or more than one continuous sets of a positive electrode and a negative electrode to form a structure in which the positive electrode and the negative electrode alternate via an adhesive resin layer.

The present invention is especially effective when applied to lithium secondary batteries, which is not limiting the application of the invention. The invention is also applicable to primary batteries, such as lithium primary batteries, manganese-zinc batteries, and silver-zinc batteries; and other types of secondary batteries, such as nickel-cadmium batteries, nickel-zinc batteries, nickel-hydrogen batteries, polymer batteries, and carbon secondary batteries.

The details of the invention will now hereinafter be given by way of Examples, but the invention is by no means limited thereto.

### EXAMPLE 1

### Preparation of electrode body:

A positive electrode active material layer consisting of 91 parts by weight of LiCoO₂ having an average particle size of 10 µm (produced by Nippon Chemical Industrial Co., Ltd.), 6 parts by weight of graphite powder (produced by LONZA Ltd.), and 3 parts by weight of polyvinylidene fluoride (produced by Kureha Chemical Industry Co., Ltd.) was applied to an aluminum foil substrate to an average coating thickness of 80 µm to form a positive electrode. A negative electrode active material layer consisting of 90 parts by weight of mesophase microbeads (produced by Osaka Gas Co., Ltd.) having an average particle size of 8 µm and 10 parts by weight of polyvinylidene fluoride was applied to a copper substrate to an average coating thickness of 80 µm to form a negative electrode. An adhesive resin solution for joining these electrodes was prepared by dispersing and dissolving polyvinylidene fluoride (produced by Elf Atochem Japan) and alumina powder having an average particle size of 0.01 µm (produced by Degussa Corporation) in a concentration of 10 wt% each in N-methlpyrrolidone. The positive electrode and the negative electrode were cut in sizes of 50 mm x 50 mm and 55 mm x 55 mm, respectively. A cut piece of the negative electrode was coated with the adhesive resin solution on a screen printing machine using a 200 mesh screen and bonded to a cut piece of the positive electrode. The laminate was dried in a drier at 80°C for 1 hour to prepare a unit electrode body. The thickness of the formed adhesive resin layer was controllable by choice of the mesh size. In this example, the thickness was 20 µm.

### Evaluation of electrode body:

### 1) Measurement of adhesive strength (peel strength)

The adhesive strength between the negative electrode and the positive electrode of the resulting electrode body was measured by a peel test at 90°.

### 2) Measurement of battery characteristics

The resulting electrode body, with a current collecting tab spot-welded to the positive and the negative electrode thereof, was put in a bag made of an aluminum laminate sheet. An electrolytic solution was poured into the bag, and the opening of the bag was sealed to complete a battery. The battery was charged and discharged at 1C, and a discharge capacity was measured as an indication of battery characteristics.

### COMPARATIVE EXAMPLE 1

Electrodes were prepared, a battery was assembled, and evaluation was made in the same manner as in Example 1, except for using an adhesive resin solution prepared by dissolving polyvinylidene fluoride (PVDF) in N-methylpyrrolidone (NMP) in a concentration of 10 wt%.

### EXAMPLE 2

Electrodes were prepared, a battery was assembled, and evaluation was made in the same manner as in Example 1, except for using an adhesive resin solution prepared by dissolving 2 wt% of polyvinyl alcohol and 5 wt% of alumina powder having an average particle size of 0.01 µm in N-methylpyrrolidone.

### COMPARATIVE EXAMPLE 2

Electrodes were prepared, a battery was assembled, and evaluation was made in the same manner as in Example 2, except for using an adhesive resin solution prepared by dissolving 2 wt% of polyvinyl alcohol in N-methylpyrrolidone.

### EXAMPLE 3

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 0.1 µm in N-methylpyrrolidone.

### EXAMPLE 4

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 1 µm in N-methylpyrrolidone.

### EXAMPLE 5

Electrodes were prepared, a battery was assembled, and evaluation was made in the same manner as in Example 1, except for using an adhesive resin solution prepared by dissolving and dispersing 10 wt% of polyvinylidene fluoride and 10 wt% of silica powder having an average particle size of 0.007 µm in N-methylpyrrolidone.

### COMPARATIVE EXAMPLE 3

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 10 µm in N-methylpyrrolidone.

### EXAMPLE 6

Electrodes were prepared, a battery was assembled, and evaluation was made in the same manner as in Example 1, except for using an adhesive resin solution prepared by dissolving and dispersing 10 wt% of polyvinylidene fluoride and 5 wt% of alumina powder having an average particle size of 0.01 µm in N-methylpyrrolidone.

### EXAMPLE 7

Electrodes were prepared, a battery was assembled, and evaluation was made in the same manner as in Example 1, except for using an adhesive resin solution prepared by dissolving and dispersing 5 wt% of polyvinylidene fluoride and 25 wt% of alumina powder having an average particle size of 0.01 µm in N-methylpyrrolidone.

### COMPARATIVE EXAMPLE 4

Electrodes were prepared, a battery was assembled, and evaluation was made in the same manner as in Example 1, except for using an adhesive resin solution prepared by dissolving and dispersing 10 wt% of polyvinylidene fluoride and 1 wt% of alumina powder having an average particle size of 0.01 µm in N-methylpyrrolidone.

### COMPARATIVE EXAMPLE 5

Electrodes were prepared, a battery was assembled, and evaluation was made in the same manner as in Example 1, except for using an adhesive resin solution prepared by dissolving and dispersing 3 wt% of polyvinylidene fluoride and 30 wt% of alumina powder having an average particle size of 0.01 µm in N-methylpyrrolidone.

### EXAMPLE 8

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 0.01 µm in N-methylpyrrolidone and using a 150 mesh screen for applying the adhesive resin solution (the thickness of the resulting adhesive resin layer was 50 µm).

### EXAMPLE 9

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 0.01 µm in N-methylpyrrolidone and using a 100 mesh screen for applying the adhesive resin solution (the thickness of the resulting adhesive resin layer was 100 µm).

### EXAMPLE 10

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 0.01 µm in N-methylpyrrolidone and using a 60 mesh screen for applying the adhesive resin solution (the thickness of the resulting adhesive resin layer was 150 µm).

### EXAMPLE 11

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 0.01 µm in N-methylpyrrolidone and using a 250 mesh screen for applying the adhesive resin solution (the thickness of the resulting adhesive resin layer was 10 µm).

### EXAMPLE 12

Electrodes were prepared, a battery was assembled, and evaluation was made in the same manner as in Example 1, except for using an adhesive resin solution prepared by dissolving and dispersing 10 wt% of polyvinylidene fluoride and 10 wt% of alumina powder having an average particle size of 0.01 µm in N-methylpyrrolidone and using a 50 mesh screen for applying the adhesive resin solution (the thickness of the resulting adhesive resin layer was 200 µm).

### EXAMPLE 13

Electrodes were prepared, a battery was assembled, and evaluation was made in the same manner as in Example 1, except for using an adhesive resin solution prepared by dissolving and dispersing 10 wt% of polyvinylidene fluoride and 10 wt% of silica powder having an average particle size of 0.01 µm (produced by Aerosil Co., Ltd.) in N-methylpyrrolidone.

### EXAMPLE 14

Electrodes were prepared, a battery was assembled, and evaluation was made in the same manner as in Example 1, except for using an adhesive resin solution prepared by dissolving and dispersing 10 wt% of polyvinylidene fluoride and 30 wt% of silicon carbide powder having an average particle size of 0.5 µm (produced by Seimi Chemical Co., Ltd.) in N-methylpyrrolidone and using a 100 mesh screen in applying the adhesive resin solution.

### EXAMPLE 15

Electrodes were prepared, a battery was assembled, and evaluation was made in the same manner as in Example 1, except for using an adhesive resin solution prepared by dissolving and dispersing 10 wt% of polyvinylidene fluoride and 30 wt% of boron carbide powder having an average particle size of 0.5 µm (produced by Seimi Chemical Co., Ltd.) in N-methylpyrrolidone.

### EXAMPLE 16

Electrodes were prepared, a battery was assembled, and evaluation was made in the same manner as in Example 1, except for using an adhesive resin solution prepared by dissolving and dispersing 10 wt% of polyvinylidene fluoride and 30 wt% of silicon nitride powder having an average particle size of 0.5 µm (produced by Seimi Chemical Co., Ltd.) in N-methylpyrrolidone.

### EXAMPLE 17

Electrodes were prepared, a battery was assembled, and evaluation was made in the same manner as in Example 1, except for using an adhesive resin solution prepared by dissolving and dispersing 10 wt% of polyvinylidene fluoride and 5 wt% of polymethyl methacrylate (PMMA) powder having an average particle size of 0.5 µm in N-methylpyrrolidone.

### EXAMPLE 18

Electrodes were prepared, a battery was assembled, and evaluation was made in the same manner as in Example 1, except for using an adhesive resin solution prepared by dissolving and dispersing 10 wt% of polyvinylidene fluoride, 9 wt% of alumina powder having an average particle size of 0.01 µm, and 1 wt% of alumina powder having an average particle size of 1 µm in N-methylpyrrolidone.

### EXAMPLE 19

Electrodes were prepared, a battery was assembled, and evaluation was made in the same manner as in Example 1, except for using an adhesive resin solution prepared by dissolving and dispersing 10 wt% of polyvinylidene fluoride, 5 wt% of alumina powder having an average particle size of 0.01 µm, and 5 wt% of silica powder having an average particle size of 0.01 µm in N-methylpyrrolidone.

### EXAMPLE 20

Electrodes were prepared, a battery was assembled, and evaluation was made in the same manner as in Example 1, except for using an adhesive resin solution prepared by dissolving and dispersing 10 wt% of polyvinylidene fluoride, 9 wt% of alumina powder having an average particle size of 0.01 µm, and 9 wt% of silica powder having an average particle size of 0.5 µm in N-methylpyrrolidone.

### EXAMPLE 21

Electrodes were prepared, a battery was assembled, and evaluation was made in the same manner as in Example 1, except for using an adhesive resin solution prepared by dissolving and dispersing 10 wt% of polyvinylidene fluoride, 9 wt% of alumina powder having an average particle size of 0.01 µm, and 1 wt% of polymethyl methacrylate powder having an average particle size of 0.5 µm in N-methylpyrrolidone.

### EXAMPLE 22

Electrodes were prepared, a battery was assembled, and evaluation was made in the same manner as in Example 1, except for using an adhesive resin solution prepared by dissolving and dispersing 10 wt% of polyvinylidene fluoride, 9 wt% of alumina powder having an average particle size of 0.01 µm, and 1 wt% of alumina powder having an average particle size of 0.5 µm in N-methylpyrrolidone.

### EXAMPLE 23

Electrodes were prepared, a battery was assembled, and evaluation was made in the same manner as in Example 1, except for using an adhesive resin solution prepared by dissolving and dispersing 10 wt% of polyvinylidene fluoride, 5 wt% of silicon carbide powder having an average particle size of 0.5 µm, and 5 wt% of polymethyl methacrylate powder having an average particle size of 0.5 µm in N-methylpyrrolidone.

### EXAMPLE 24

Electrodes were prepared, a battery was assembled, and evaluation was made in the same manner as in Example 1 except for the following. An adhesive resin solution prepared by dissolving and dispersing 10 wt% of polyvinylidene fluoride and 20 wt% of iron powder having an average particle size of 0.5 µm in N-methylpyrrolidone was applied to a side of each electrode on a screen printing machine using a 400 mesh screen and dried. An adhesive resin solution prepared by dissolving and dispersing 10 wt% of polyvinylidene fluoride and 10 wt% of alumina powder having an average particle size of 0.01 µm in N-methylpyrrolidone was applied to the previously coated side of the negative electrode on a screen printing machine using a 200 mesh screen. The previously coated side of the positive electrode was stuck thereto, and the laminate was dried.

### EXAMPLE 25

Electrodes were prepared, a battery was assembled, and evaluation was made in the same manner as in Example 1 except for the following. An adhesive resin solution prepared by dissolving and dispersing 10 wt% of polyvinylidene fluoride and 50 wt% of carbon powder having an average particle size of 1 µm (produced by Osaka Gas Co., Ltd.) in N-methylpyrrolidone was applied to a side of each electrode on a screen printing machine using a 400 mesh screen and dried. An adhesive resin solution prepared by dissolving and dispersing 10 wt% of polyvinylidene fluoride and 10 wt% of alumina powder having an average particle size of 0.01 µm in N-methylpyrrolidone was applied to the previously coated side of the negative electrode on a screen printing machine using a 200 mesh screen, and the previously coated side of the positive electrode was stuck thereto, followed by drying.

### EXAMPLE 26

Electrodes were prepared, a battery was assembled, and evaluation was made in the same manner as in Example 1 except for the following. An adhesive resin solution prepared by dissolving and dispersing 10 wt% of polyvinylidene fluoride and 20 wt% of iron powder having an average particle size of 1 µm in N-methylpyrrolidone was applied to a side of each electrode on a screen printing machine using a 400 mesh screen and dried. An adhesive resin solution prepared by dissolving and dispersing 10 wt% of polyvinylidene fluoride and 30 wt% of silicon carbide powder having an average particle size of 0.5 µm in N-methylpyrrolidone was applied to the previously coated side of the negative electrode on a screen printing machine using a 200 mesh screen. The previously coated side of the positive electrode was stuck thereto, and the resulting laminate was dried. Electrodes were prepared, a battery was assembled, and evaluation was made in the same manner as in Example 1 except for using an adhesive resin solution prepared by dissolving and dispersing 10 wt% of polyvinylidene fluoride, 9 wt% of alumina powder having an average particle size of 0.01 µm, and 1 wt% of iron powder having an average particle size of 0.5 µm in N-methylpyrrolidone.

### EXAMPLE 27

Electrodes were prepared, a battery was assembled, and evaluation was made in the same manner as in Example 1 except for the following. An adhesive resin solution prepared by dissolving and dispersing 10 wt% of polyvinylidene fluoride and 50 wt% of carbon powder having an average particle size of 1 µm in N-methylpyrrolidone was applied to a side of each electrode on a screen printing machine using a 400 mesh screen and dried. An adhesive resin solution prepared by dissolving and dispersing 10 wt% of polyvinylidene fluoride and 30 wt% of silicon carbide powder having an average particle size of 0.5 µm in N-methylpyrrolidone was applied to the previously coated side of the negative electrode on a screen printing machine using a 200 mesh screen. The previously coated side of the positive electrode was stuck thereto, and the resulting laminate was dried.

### EXAMPLE 28

Electrodes were prepared, a battery was assembled, and evaluation was made in the same manner as in Example 1 except for the following. An adhesive resin solution prepared by dissolving and dispersing 10 wt% of polyvinylidene fluoride and 20 wt% of iron powder having an average particle size of 1 µm in N-methylpyrrolidone was applied to a side of each electrode on a screen printing machine using a 400 mesh screen and dried. An adhesive resin solution prepared by dissolving and dispersing 10 wt% of polyvinylidene fluoride and 5 wt% of polymethyl methacrylate powder having an average particle size of 0.5 µm in N-methylpyrrolidone was applied to the previously coated side of the negative electrode on a screen printing machine using a 200 mesh screen. The previously coated side of the positive electrode was stuck thereto, and the resulting laminate was dried.

### EXAMPLE 29

Electrodes were prepared, a battery was assembled, and evaluation was made in the same manner as in Example 1 except for the following. An adhesive resin solution prepared by dissolving and dispersing 10 wt% of polyvinylidene fluoride and 50 wt% of carbon powder having an average particle size of 1 µm in N-methylpyrrolidone was applied to a side of each electrode on a screen printing machine using a 400 mesh screen and dried. An adhesive resin solution prepared by dissolving and dispersing 10 wt% of polyvinylidene fluoride and 5 wt% of polymethyl methacrylate powder having an average particle size of 0.5 µm in N-methylpyrrolidone was applied to the previously coated side of the negative electrode on a screen printing machine using a 200 mesh screen. The previously coated side of the positive electrode was stuck thereto, and the resulting laminate was dried.

### EXAMPLE 30

A positive electrode, a negative electrode, and an adhesive resin solution were prepared in the same manner as in Example 1. The positive electrode and the negative electrode were cut in pieces of 50 mm x 50 mm and 55 mm x 55 mm, respectively. The adhesive resin solution was applied to a side of a cut piece of the negative electrode on a screen printing machine, and a cut piece of the positive electrode was stuck thereto. Then, a side of another piece of the negative electrode was coated with the adhesive resin solution and bonded to the previously bonded positive electrode. These steps were repeated 6 times to build up a laminated battery body. The battery body was dried while applying pressure to obtain a tabular laminated battery body having positive and negative electrodes alternately bonded via an adhesive resin layer. The battery characteristics of the resulting battery body were evaluated in the same manner as in Example 1.

### EXAMPLE 31

A positive electrode, a negative electrode, and an adhesive resin solution were prepared in the same manner as in Example 1. The positive electrode and the negative electrode were cut in pieces of 50 mm x 50 mm and 55 mm x 55 mm, respectively. The adhesive resin solution was applied to a side of a cut piece of the positive electrode on a screen printing machine, and a cut piece of the negative electrode was stuck thereto. Then, a side of another piece of the positive electrode was coated with the adhesive resin solution and bonded to the previously bonded negative electrode. These steps were repeated 6 times to build up a laminated battery body. The battery body was dried while applying pressure to obtain a tabular laminated battery body having positive and negative electrodes alternately bonded with an adhesive resin layer. The battery characteristics of the resulting battery body were evaluated in the same manner as in Example 1.

### EXAMPLE 32

A positive electrode, a negative electrode, and an adhesive resin solution were prepared in the same manner as in Example 1. A band of 300 mm x 50 mm and of 305 mm x 55 mm was cut out of the positive electrode and the negative electrode, respectively. The adhesive resin solution was applied to a side of the negative electrode band on a screen printing machine. One end of the coated negative electrode was folded back at a prescribed length. The positive electrode band was inserted into the center of the fold, and the folded end was sent to a laminator. Subsequently, the positive electrode and the negative electrode were superposed and passed through the laminator. The laminate was rolled up into an oblong cylinder while applying the adhesive resin solution to the other side of the negative electrode that was opposite to the side previously coated with the adhesive resin solution.

The rolled oblong battery body was dried while applying pressure to obtain a tabular roll type battery body having positive and negative electrodes bonded alternately via an adhesive resin layer. The battery characteristics of the resulting battery body were evaluated in the same manner as in Example 1.

### EXAMPLE 33

A positive electrode, a negative electrode, and an adhesive resin solution were prepared in the same manner as in Example 1. A band of 300 mm x 50 mm and of 305 mm x 55 mm was cut out of the positive electrode and the negative electrode, respectively. The adhesive resin solution was applied to a side of the positive electrode on a screen printing machine. One end of the coated positive electrode was folded back at a prescribed length. The negative electrode band was inserted into the center of the fold. Subsequently, the folded positive electrode and the negative electrode were superposed and passed through the laminator. The adhesive resin solution was applied to the other side of the positive electrode that was opposite to the side previously coated with the adhesive resin solution, and the laminate was rolled up into an oblong cylinder.

The rolled oblong battery body was dried while applying pressure to obtain a tabular roll type battery body having positive and negative electrodes bonded alternately via an adhesive resin layer. The battery characteristics of the resulting battery body were evaluated in the same manner as in Example 1.

### EXAMPLE 34

A positive electrode, a negative electrode, and an adhesive resin solution were prepared in the same manner as in Example 1. A piece of 50 mm x 50 mm and of 55 mm x 55 mm was cut out of the positive electrode and the negative electrode, respectively. The adhesive resin solution was applied to a side of the negative electrode by means of a roll coater the nip of which was adjusted to give a coating thickness substantially equal to that in Example 1. The negative electrode and the positive electrode were joined and dried in a drier at 80°C for 1 hour to obtain a battery body comprising a unit electrode body having the positive electrode and the negative electrode bonded together. The battery characteristics of the resulting battery body were evaluated in the same manner as in Example 1.

### EXAMPLE 35

A positive electrode, a negative electrode, and an adhesive resin solution were prepared in the same manner as in Example 1. A piece of 50 mm x 50 mm and of 55 mm x 55 mm was cut out of the positive electrode and the negative electrode, respectively. The adhesive resin solution was applied to a side of the negative electrode by means of a gravure printing machine the nip of which was adjusted to give a coating thickness substantially equal to that in Example 1. The negative electrode and the positive electrode were joined and dried in a drier at 80°C for 1 hour to obtain a battery body comprising a unit electrode body having the positive electrode and the negative electrode bonded together. The battery characteristics of the resulting battery body were evaluated in the same manner as in Example 1.

### EXAMPLE 36

A positive electrode, a negative electrode, and an adhesive resin solution were prepared in the same manner as in Example 1. A piece of 50 mm x 50 mm and of 55 mm x 55 mm was cut out of the positive electrode and the negative electrode, respectively. The adhesive resin solution was applied to a side of the negative electrode by means of a doctor blade coater the gap of which was adjusted to give a coating thickness substantially equal to that in Example 1. The negative electrode and the positive electrode were joined and dried in a drier at 80°C for 1 hour to obtain a battery body comprising a unit electrode body having the positive electrode and the negative electrode bonded together. The battery characteristics of the resulting battery body were evaluated in the same manner as in Example 1.

### EXAMPLE 37

A positive electrode, a negative electrode, and an adhesive resin solution were prepared in the same manner as in Example 1. A piece of 50 mm x 50 mm and of 55 mm x 55 mm was cut out of the positive electrode and the negative electrode, respectively. The adhesive resin solution was applied to a side of the negative electrode by means of a bar coater the gap of which was adjusted to give a coating thickness substantially equal to that in Example 1. The negative electrode and the positive electrode were joined and dried in a drier at 80°C for 1 hour to obtain a battery body comprising a unit electrode body having the positive electrode and the negative electrode bonded together. The battery characteristics of the resulting battery body were evaluated in the same manner as in Example 1.

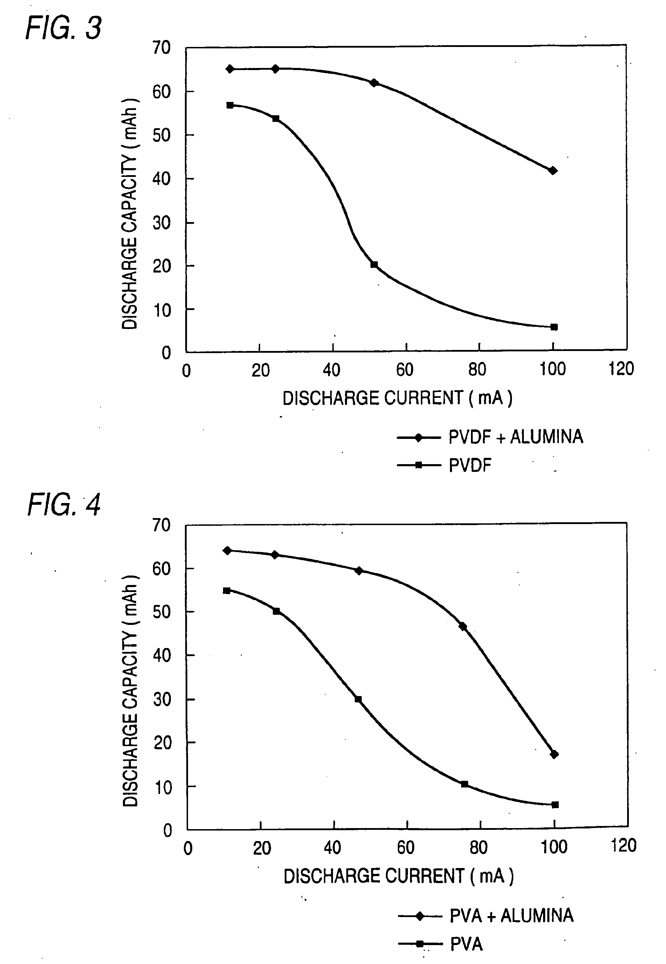

The adhesive strength of the prepared electrodes and the discharge capacity in charging and discharging the prepared batteries at 1C are shown in Tables 1 through 9. The graphs of discharge capacity vs. charging and discharging current with different adhesive resins are shown in Figs. 3 and 4. Comparisons between Example 1 and Comparative Example 1 and between Example 2 and Comparative Example 2 reveal that addition of a filler to an adhesive resin solution brings about improvement in discharge capacity, especially under a high load.

**TABLE 1**

| | Adhesive | | | | Peel Strength (gf/cm) | Discharge Capacity (1C) (mAh) |
|---|---|---|---|---|---|---|
| | Resin | Filler | Weight Ratio | Particle Size of Filler (µm) | | |
| Example 1 | PVDF | alumina | 1:1 | 0.01 | 50 | 60 |
| Compara. Example 1 | PVDF | none | - | - | 100 | 20 |
| Example 2 | PVA | alumina | 2:5 | 0.01 | 70 | 60 |
| Compara. Example 2 | PVA | none | - | - | 100 | 30 |

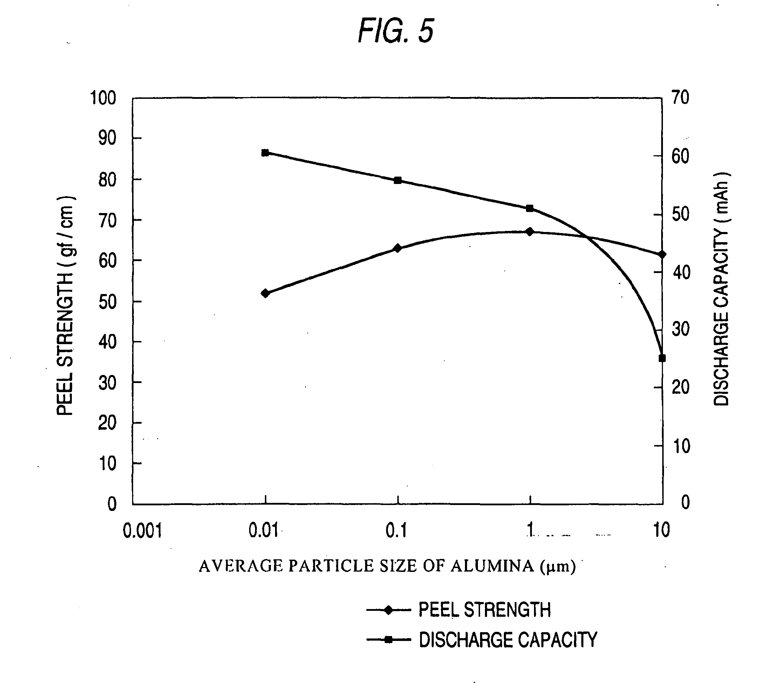

Table 2 shows the results obtained with the average particle size of an alumina filler varied and the results obtained with a silica filler having a smaller particle size. These results are graphed in Fig. 5, in which the peel strength and the discharge capacity are plotted against the particle size of the alumina filler added. It can be seen that the peel strength somewhat decreases at a particle size of 1 µm or smaller, which was not problematical for practical use. It is also seen that, on the other hand, the discharge capacity tends to decrease as the average particle size becomes greater than 1 µm because of reduction of void volume in the adhesive resin layer.

**TABLE 2**

| | Adhesive | | | | Peel Strength (gf/cm) | Discharge Capacity (1C) (mAh) |
|---|---|---|---|---|---|---|
| | Resin | Filler | Weight Ratio | Particle Size of Filler (µm) | | |
| Example 1 | PVDF | alumina | 1:1 | 0.01 | 50 | 60 |
| Example 3 | PVDF | alumina | 1:1 | 0.1 | 60 | 55 |
| Example 4 | PVDF | alumina | 1:1 | 1 | 65 | 50 |
| Example 5 | PVDF | silica | 1:1 | 0.007 | 45 | 60 |
| Compara. Example 3 | PVDF | alumina | 1:1 | 10 | 60 | 25 |

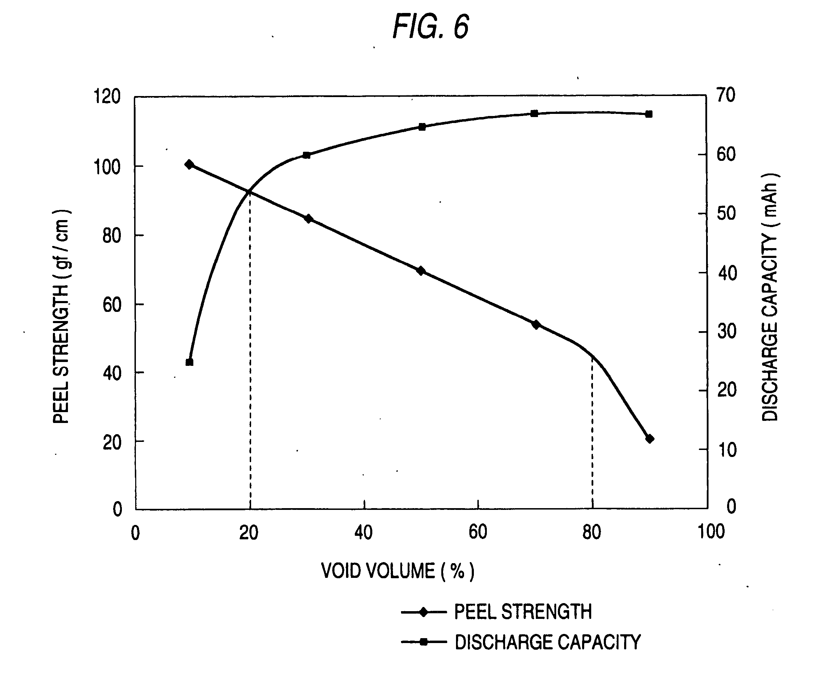

Table 3 shows the results obtained when the ratio of the alumina filler to the adhesive resin was varied. These results are graphed in Fig. 6, in which the peel strength and the battery capacity are plotted against volume percentage of the voids. The proportion of the adhesive resin in the void volume formed by the filler changes with a change of the filler to resin ratio, and a change of the void volume in the adhesive resin layer follows. If the volume percentage of the voids is 20% or less, passages for ions through the adhesive resin layer are diminished, resulting in an obvious reduction in discharge capacity. On the other hand, the adhesive strength tends to reduce with an increase of volume percentage of the voids. If the volume percentage of the voids is 80% or more, the amount of the filler is so large that the amount of the adhesive resin is insufficient, resulting in an extreme reduction in adhesive strength.

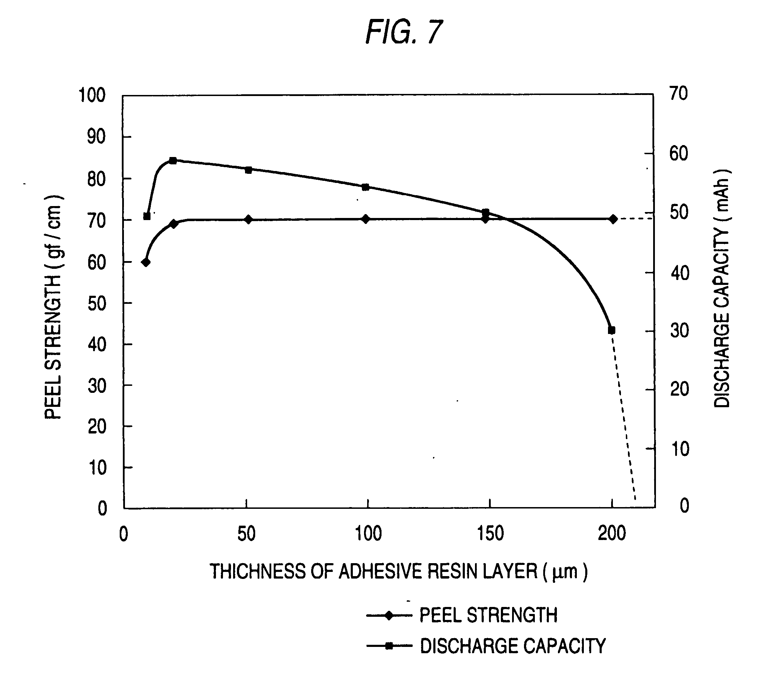

Table 4 shows the results obtained when the thickness of the adhesive resin layer was varied. The peel strength and the discharge capacity are plotted against the thickness in Fig. 7. As can be seen, with a coating thickness of 50 µm or smaller, the adhesive resin layer does not cause hindrance to ion conduction while filling the gap formed by the unevenness of the electrodes so that a high discharge capacity can be secured. If the thickness exceeds 50 µm, the passages for ions are so long that they become resistance and cause gradual reduction of discharge capacity. If the thickness of the adhesive resin layer is increased to about 200 µm, the rate of reduction in discharge capacity is as high as about 50%.

**TABLE 3**

| | Adhesive | | | | Volume of Solid Matter (%) | Void Volume (%) | Peel Strength (gf/cm) | Discharge Capacity (1C) (mAh) |
|---|---|---|---|---|---|---|---|---|
| | Resin | Filler | Weight Ratio | Particle Size of Filler (µm) | | | | |
| Example 1 | PVDF | alumina | 1:1 | 0.01 | 50 | 50 | 70 | 62 |
| Example 6 | PVDF | alumina | 2:1 | 0.01 | 70 | 30 | 85 | 58 |
| Example 7 | PVDF | alumina | 1:5 | 0.01 | 30 | 70 | 60 | 65 |
| Compara. Example 4 | PVDF | alumina | 10:1 | 0.01 | 90 | 10 | 100 | 20 |
| Compara. Example 5 | PVDF | alumina | 1:10 | 0.01 | 10 | 90 | 20 | 65 |

**TABLE 4**

| | Adhesive | | | | Thickness (µm) | Peel Strength (gf/cm) | Discharge Capacity (1C) (mAh) |
|---|---|---|---|---|---|---|---|
| | Resin | Filler | Weight Ratio | Particle Size of Filler (µm) | | | |
| Example 1 | PVDF | alumina | 1:1 | 0.01 | 20 | 70 | 60 |
| Example 8 | PVDF | alumina | 1:1 | 0.01 | 50 | 70 | 58 |
| Example 9 | PVDF | alumina | 1:1 | 0.01 | 100 | 70 | 55 |
| Example 10 | PVDF | alumina | 1:1 | 0.01 | 150 | 70 | 50 |
| Example 11 | PVDF | alumina | 1:1 | 0.01 | 10 | 60 | 60 |
| Example 12 | PVDF | alumina | 1:1 | 0.01 | 200 | 70 | 30 |

Fig. 5 shows the results obtained from different kinds of fillers. It was proved that various fillers produce similar effects. In particular, great effects are obtained with inorganic compounds and polymers

**TABLE 5**

| | Adhesive | | | | Peel Strength (gf/cm) | Discharge Capacity (1C) (mAh) |
|---|---|---|---|---|---|---|
| | Resin | Filler | Weight Ratio | Particle Size of Filler (µm) | | |
| Example 1 | PVDF | alumina | 1:1 | 0.01 | 50 | 60 |
| Example 13 | PVDF | silica | 1:1 | 0.01 | 50 | 60 |
| Example 14 | PVDF | silicon carbide | 1:3 | 0.5 | 80 | 50 |
| Example 15 | PVDF | boron carbide | 1:3 | 0.5 | 80 | 50 |
| Example 16 | PVDF | silicon nitride | 1:3 | 0.5 | 80 | 50 |
| Example 17 | PVDF | PMMA | 2:1 | 0.5 | 80 | 50 |

Table 6 shows the results obtained when two kinds of fillers were used in combination. It is seen that similar effects are produced when fillers are used in various combinations. It is understood, in particular, that materials that contain no conducive materials show great effects.

**TABLE 6**

| | Adhesive | | | | | | | | Peel Strength | Discharge Capacity (1C) (mAh) |
|---|---|---|---|---|---|---|---|---|---|---|
| | Resin | | Filler 1 | | | Filler 2 | | | | |
| | Kind | Weight Ratio | Kind | Weight Ratio | Particle Size of Filler (µm) | Kind | Weight Ratio | Particle Size of Filler (µm) | | |
| Example 1 | PVDF | 1 | alumina | 1 | 0.01 | none | 0 | 0 | 50 | 60 |
| Example 18 | PVDF | 1 | alumina | 0.9 | 0.01 | alumina | 0.1 | 1 | 55 | 55 |
| Example 19 | PVDF | 1 | alumina | 0.5 | 0.01 | silica | 0.5 | 0.01 | 50 | 60 |
| Example 20 | PVDF | 1 | alumina | 0.9 | 0.01 | silica | 0.1 | 0.5 | 55 | 55 |
| Example 21 | PVDF | 1 | alumina | 0.9 | 0.01 | PMMA | 0.1 | 0.5 | 55 | 55 |
| Example 22 | PVDF | 1 | alumina | 0.9 | 0.01 | silicon carbide | 0.1 | 0.5 | 55 | 55 |
| Example 23 | PVDF | 1 | silicon carbide | 0.5 | 0.5 | PMMA | 0.5 | 0.5 | 80 | 55 |

Table 7 shows the results obtained in case where the adhesive resin layer provided had a three layer structure having an insulating filler-containing adhesive resin layer (intermediate layer) between conductive filler-containing adhesive resin layers (electrode surface layers). It is understood that similar effects are obtained from various combinations of a conductive filler and an insulating filler.

**TABLE 7**

| | Adhesive | | | | | | | | | | Peel Strength (gf/cm) | Dis charge Capa city (1C) (mAh) |
|---|---|---|---|---|---|---|---|---|---|---|---|---|
| | Adhesive Resin Layer (Intermediate Layer) | | | | | Adhesive Resin Layer (Electrode Surface Layer) | | | | | | |
| | Adhesive Resin | | Filler | | | Adhesive Resin | | Filler | | | | |
| | Kind | Weight Ratio | Kind | Weight Size Ratio | Particle of Filler (µm) | Kind | Weight Ratio | Kind | Weight Ratio | Particle Size of Filler (µm) | | |
| Example 1 | PVDF | 1 | alumina | 1 | 0.01 | none | - | - | - | - | 50 | 60 |
| Example 24 | PVDF | 1 | alumina | 1 | 0.01 | PVDF | 1 | iron | 2 | 0.5 | 55 | 50 |
| Example 25 | PVDF | 1 | alumina | 1 | 0.01 | PVDF | 1 | carbon | 5 | 1 | 55 | 50 |
| Example 26 | PVDF | 1 | silicon carbide | 3 | 0.5 | PVDF | 1 | iron | 2 | 1 | 80 | 45 |
| Example 27 | PVDF | 1 | silicon carbide | 3 | 0.5 | PVDF | 1 | carbon | 1 | 1 | 80 | 45 |
| Example 28 | PVDF | 1 | PMMA | 0.5 | 0.5 | PVDF | 1 | iron | 2 | 1 | 80 | 45 |
| Example 29 | PVDF | 1 | PMMA | 0.5 | 0.5 | PVDF | 1 | carbon | 5 | 1 | 80 | 45 |

Table 8 shows the results of testing on battery characteristics of various battery structures. It proves that satisfactory battery characteristics can be obtained irrespective of the battery structure.

**TABLE 8**

| | Adhesive | | | | Battery Structure | Discharge Capacity (1C) (mAh) |
|---|---|---|---|---|---|---|
| | Resin | Filler | Weight Ratio | Particle Size of Filler (µm) | | |
| Example 1 | PVDF | alumina | 1:1 | 0.01 | tabular unit electrode body | 60 |
| Example 30 | PVDF | alumina | 1:1 | 0.01 | tabular laminated electrode body | 360 |
| Example 31 | PVDF | alumina | 1:1 | 0.01 | " | 360 |
| Example 32 | PVDF | alumina | 1:1 | 0.01 | tabular rolled electrode body | 360 |
| Example 33 | PVDF | alumina | 1:1 | 0.01 | " | 360 |

Table 9 shows the results of testing on battery characteristics obtained when the method for applying the adhesive resin solution was altered. As shown in Table 9, satisfactory battery characteristics can be obtained irrespective of the application method as long as the coating thickness is substantially equal.

**TABLE 9**

| | Adhesive | | | | Method of Adhesive Application | Discharge Capacity (1C) (mAh) |
|---|---|---|---|---|---|---|
| | Resin | Filler | Weight Ratio | Particle Size of Filler (µm) | | |
| Example 1 | PVDF | alumina | 1:1 | 0.01 | screen printing | 60 |
| Example 34 | PVDF | alumina | 1:1 | 0.01 | roll coater | 60 |
| Example 35 | PVDF | alumina | 1:1 | 0.01 | gravure printing | 60 |
| Example 36 | PVDF | alumina | 1:1 | 0.01 | doctor blade | 60 |
| Example 37 | PVDF | alumina | 1:1 | 0.01 | bar coater | 60 |

### Industrial Applicability

The battery according to the invention is used as a secondary battery, etc. in portable electronic equipment and has reduced size and weight as well as improved battery performance.

## Claims

1. A battery comprising a battery body including:
- a positive and a negative electrode containing an active material;
- an electrolytic solution containing an electrolyte; and
- an adhesive resin layer which is interposed in between the positive electrode and the negative electrode and is joined to at least one of the positive and the negative electrodes;
- wherein the adhesive resin layer comprises at least one layer and contains insulating filler particles,
**characterised in that** the average particle size of the insulating filler particles is 1 µm or smaller;
and **in that** the sum of the volume ratio of the adhesive resin and that of the insulating filler particles per unit volume of the adhesive resin layer is 0.2 to 0.8.

2. The battery according to claim 1,
wherein the electrolyte is an organic electrolyte containing lithium ions.

3. The battery according to claim 1 or 2,
wherein the average particle size of the insulating filler particles is equal to or smaller than the particle size of the active material constituting each electrode.

4. The battery according to any of claims 1 to 3,
wherein the sum of a volume ratio of the adhesive resin and that of the insulating filler particles per unit volume of the adhesive resin layer is less than 1.

5. The battery according to any of claims 1 to 4,
wherein the insulating filler particles comprise at least one of non-conductive materials and semiconductors.

6. The battery according to any of claims 1 to 5,
wherein the adhesive resin layer comprises a layer containing electrically conductive filler particles and a layer containing at least one of non-conductive filler particles and semiconductive filler particles.

7. The battery according to any of claims 1 to 6,
wherein the adhesive resin layer is constituted so as to fill the unevenness of the positive electrode and the negative electrode.

8. The battery according to any of claims 1 to 7,
wherein the battery body is a laminate of a plurality of electrode bodies each composed of a single layer of the positive electrode, a single layer of the adhesive resin layer, and a single layer of the negative electrode.

9. The battery according to claim 8,
wherein the laminate is composed of the positive electrodes and the negative electrodes interposed alternately among a plurality of the adhesive resin layers.

10. The battery according to claim 8,
wherein the laminate is composed of the positive electrode and the negative electrode which are alternately interposed between adhesive resin layers and rolled up.

11. The battery according to claim 8,
wherein the laminate is composed of the positive electrode and the negative electrode which are alternately interposed between adhesive resin layers and folded.

## Patentansprüche

1. Batterie mit einem Batteriekörper, die folgendes aufweist:
- eine positive und eine negative Elektrode mit einem darin enthaltenen aktiven Material;
- ein Elektrolytlösung, die einen Elektrolyten enthält; und
- eine haftende Harzmaterialschicht, die zwischen der positiven Elektrode und der negativen Elektrode angeordnet ist und die mit mindestens einer von der positiven und der negativen Elektrode verbunden ist;
- wobei die haftende Harzmaterialschicht mindestens eine Schicht aufweist und isolierende Füllmaterialpartikel enthält,
**dadurch gekennzeichnet,**
**daß** die durchschnittliche Partikelgröße der isolierenden Füllmaterialpartikel 1 µm oder weniger beträgt;
und **daß** die Summe aus einem Volumenverhältnis des haftenden Harzmaterials und dem Volumenverhältnis der isolierenden Füllmaterialpartikel pro Volumeneinheit der haftenden Harzmaterialschicht 0,2 bis 0,8 beträgt.

2. Batterie nach Anspruch 1,
wobei es sich bei dem Elektrolyten um einen organischen Elektrolyten handelt, der Lithiumionen enthält.

3. Batterie nach Anspruch 1,
wobei die durchschnittliche Partikelgröße der isolierenden Füllmaterialpartikel gleich der oder kleiner als die Partikelgröße des aktiven Materials ist, aus dem jede Elektrode gebildet ist.

4. Batterie nach einem der Ansprüche 1 bis 3,
wobei die Summe aus einem Volumenverhältnis des haftenden Harzmaterials und dem Volumenverhältnis der isolierenden Füllmaterialpartikel pro Volumeneinheit weniger als 1 beträgt.

5. Batterie nach Anspruch 4,
wobei die isolierenden Füllmaterialpartikel mindestens eine Sorte von nicht-leitenden Materialien und Halbleitern aufweist.

6. Batterie nach einem der Ansprüche 1 bis 5,
wobei die haftende Harzmaterialschicht eine Schicht, die elektrisch leitende Füllmaterialpartikel enthält, sowie eine Schicht aufweist, die mindestens eine Sorte von nicht-leitenden Füllmaterialpartikeln und halbleitenden Füllmaterialpartikeln enthält.

7. Batterie nach einem der Ansprüche 1 bis 6,
wobei die haftende Harzmaterialschicht derart ausgebildet ist, daß sie die Unebenheit der positiven Elektrode und der negativen Elektrode ausfüllt.

8. Batterie nach einem der Ansprüche 1 bis 7,
wobei es sich bei dem Batteriekörper um ein Schichtgebilde aus einer Vielzahl von Elektrodenkörpern handelt, von denen jeder aus einer Einzellage der positiven Elektrode, einer Einzellage der haftenden Harzmaterialschicht und einer Einzellage der negativen Elektrode gebildet ist.

9. Batterie nach Anspruch 8,
wobei das Schichtgebilde durch Anordnen der positiven Elektroden und der negativen Elektroden in abwechselnder Weise zwischen einer Vielzahl der haftenden Harzmaterialschichten gebildet ist.

10. Batterie nach Anspruch 8,
wobei das Schichtgebilde durch Anordnen der positiven Elektrode und der negativen Elektrode in abwechselnder Weise zwischen haftenden Harzmaterialschichten gebildet ist sowie gewickelt ist.

11. Batterie nach Anspruch 8,
wobei das Schichtgebilde durch Anordnen der positiven Elektrode und der negativen Elektrode in abwechselnder Weise zwischen haftenden Harzmaterialschichten gebildet ist sowie gefaltet ist.

## Revendications

1. Batterie comprenant un corps de batterie qui inclut:
- une électrode positive et une électrode négative qui contiennent un matériau actif;
- une solution électrolytique qui contient un électrolyte; et
- une couche de résine adhésive qui est interposée entre l'électrode positive et l'électrode négative et qui est reliée à l'une au moins de l'électrode positive et de l'électrode négative;
- dans laquelle la couche de résine adhésive comprend au moins une couche et contient des particules d'une charge de remplissage isolante;
**caractérisée en ce que** la dimension particulaire moyenne des particules de la charge de remplissage isolante est égale ou inférieure à 1 µm;
et **en ce que** la somme du rapport de volume de la résine adhésive et de celui des particules de la charge de remplissage isolante par unité de volume de la couche de résine adhésive est comprise entre 0,2 et 0,8.

2. Batterie selon la revendication 1,
dans laquelle l'électrolyte est un électrolyte organique qui contient des ions de lithium.

3. Batterie selon la revendication 1 ou la revendication 2,
dans laquelle la dimension particulaire moyenne des particules de la charge de remplissage isolante est égale ou inférieure à la dimension particulaire du matériau actif qui constitue chaque électrode.

4. Batterie selon l'une quelconque des revendications 1 à 3,
dans laquelle la somme du rapport de volume de la résine adhésive et de celui des particules de la charge de remplissage isolante par unité de volume de la couche de résine adhésive est inférieure à 1.

5. Batterie selon l'une quelconque des revendications 1 à 4,
dans laquelle les particules de la charge de remplissage isolante comprennent au moins des matériaux non conducteurs et / ou des semiconducteurs.

6. Batterie selon l'une quelconque des revendications 1 à 5,
dans laquelle la couche de résine adhésive comprend une couche qui contient des particules d'une charge de remplissage conductrice de manière électrique et une couche qui contient au moins des particules d'une charge de remplissage non conductrice et / ou des particules d'une charge de remplissage semi-conductrice.

7. Batterie selon l'une quelconque des revendications 1 à 6,
dans laquelle la couche de résine adhésive est constituée de manière à remplir les anfractuosités entre l'électrode positive et l'électrode négative.

8. Batterie selon l'une quelconque des revendications 1 à 7,
dans laquelle le corps de batterie est un stratifié d'une pluralité de corps d'électrodes composés chacun d'une seule couche de l'électrode positive,
d'une seule couche de la couche de résine adhésive, et d'une seule couche de l'électrode négative.

9. Batterie selon la revendication 8,
dans laquelle le stratifié se compose d'électrodes positives et d'électrodes négatives interposées alternativement parmi une pluralité de couches de résine adhésives.

10. Batterie selon la revendication 8,
dans laquelle le stratifié se compose de l'électrode positive et de l'électrode négative qui sont alternativement interposées entre des couches de résine adhésives et qui sont enroulées.

11. Batterie selon la revendication 8,
dans laquelle le stratifié se compose de l'électrode positive et de l'électrode négative qui sont alternativement interposées entre des couches de résine adhésives et qui sont pliées.
